# EUROPÄISCHE PATENTANMELDUNG

(11) **EP 2 282 156 A2**
(43) Veröffentlichungstag der Anmeldung: **09.02.2011**
(21) Anmeldenummer: 10152225.8
(22) Anmeldetag: 01.02.2010
(51) Int. Cl.: F28F 21/08, F24H 8/00

(54) **Wärmetauscher**

(30) Priorität: 12.02.2009 DE 102009008593
(71) Anmelder: Robert Bosch GmbH, 70442 Stuttgart (DE)
(72) Erfinder: Schmid, Hellmut, 74343 Sachsenheim (DE)

(57) **Zusammenfassung**

Der Erfindung liegt die Aufgabe zugrunde, einen Wärmetauscher für ein Brennwertheizgerät zu schaffen, der auch für die Gas- und Ölbrennwerttechnik geeignet ist, dessen Konstruktion auf einem kostengünstigen, nicht notwendigerweise rostfreien Grundwerkstoff basiert und auch die Vorteilsnutzung der Herstellung im Gießverfahren ermöglicht.

Der erfindungsgemäße Wärmetauscher ist gekennzeichnet durch eine Beschichtung mindestens in Teilbereichen der heizgasberührten Strömungskanal-Oberflächen. Diese Beschichtung besteht aus einem Kunststoff oder einem Kunststoffgemisch und dient der Bildung einer geschlossenen Barriere gegenüber den gasförmigen und/oder kondensierenden Heizgasen. Die Beschichtung ist innerhalb weiter Grenzen langzeitbeständig gegenüber dem sauren Kondenswasser sowie gegenüber den Heizgastemperaturen, mit denen sie im Betrieb belastet ist. Durch ihre Barrierewirkung stellt sie eine zuverlässige Trennung zwischen dem Heizgas und dem Wärmetauschergrundwerkstoff dar und schützt so den Wärmetauscher vor einem Kontakt mit dem aggressiven Kondenswasser der abkühlenden Heizgase.

## Beschreibung

Die Erfindung betrifft einen Wärmetauscher für ein Brennwertheizgerät nach dem Oberbegriff des Patentanspruches 1.

Gattungsgemäße Wärmetauscher werden bei Heizgeräten für den Wärmeaustausch zwischen den Heizgasen und dem Wärmeträgerfluid, zumeist Kesselwasser, eingesetzt. Ihr Aufbau umfasst in der Regel eine Brennkammer zur Aufnahme des Gas- oder Ölbrenners, Strömungskanäle für Kesselwasser und Heizgase mit Nachschaltheizflächen für die Kondensation der Abgasfeuchte sowie Abgasaustrittsöffnungen zum Anbringen eines Abgasund Kondensatsammlers. Die erwartete Lebensdauer solcher Wärmetauscher liegt bei 15 bis 20 Jahren.

Hinsichtlich der Heizgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Heizgase unter die Abgastaupunkttemperatur abzukühlen. Dabei kondensiert die Feuchtigkeit der Heizgase an den Oberflächen der der Brennkammer in Strömungsrichtung nachfolgenden Strömungskanäle (Nachschaltheizfläche) aus, und es wird zusätzlich zur fühlbaren Wärme der Heizgase deren Kondensationswärme auf das Heizwasser übertragen. Die abgekühlten Heizgase (das Abgas) und das Kondenswasser strömen zum Abgas- und Kondensatsammler und werden dann getrennt abgeführt, während das Kesselwasser den Wärmetauscher in der Regel im Gegenstrom zum Heizgas durchströmt.

Die Strömungskanal-Oberfläche im brennkammernahen Wärmetauscherbereich ist zumeist so heiß, dass hier noch keine Kondensation stattfinden kann. Erst weiter strömungsabwärts an der Oberfläche des kühleren Wärmetauscherbereichs kondensiert die Feuchtigkeit und fällt in Tröpfchenform aus. Je nach Wärmetauscherzustand (kalt / heiß, Kaltstart, Brennertakten mit kürzeren oder längeren Einschaltphasen, Dauerbetrieb) verschieben sich die Bereiche der trockenen und feuchten Oberflächen innerhalb des Wärmetauschers. Normalerweise trockene Bereiche (Oberflächentemperatur größer Abgastaupunkttemperatur, Brennernähe) können beim Kaltstart feucht werden. Normalerweise feuchte Bereiche (Oberflächentemperatur kleiner Abgastaupunkttemperatur, Brennerferne) können bei höheren Temperaturen im Dauerbetrieb trocken werden. Im letzteren Fall läuft das Kondenswasser nicht ab, sondern trocknet ab, eventuelle Kondenswasserbegleitstoffe konzentrieren auf.

Aufgrund der Zusammensetzung des verwendeten Brennstoffs und der Verbrennungsführung sind die Abgase schadstoffbelastet und das anfallende Kondenswasser weist verschiedene Säuren auf. Die Säurekonzentration im Kondenswasser hängt sowohl von den Kondensationsbedingungen (z.B. Wärmetauschertemperaturen) als auch vom verwendeten Brennstoff ab und ist bei Heizöl EL aufgrund seines höheren Schwefelgehaltes gegenüber Erdgas deutlich höher. Das im vorigen Absatz beschriebene Aufkonzentrieren der Begleitstoffe im verdunstenden Kondenswasser führt dazu, dass die pH-Werte der Säure bei Verbrennung von Heizöl von ca. pH = 2...3 im flüssigen auf Werte pH ≤ 1 im verdunstenden Kondenswasser fallen können. Im Zusammenhang mit den innerhalb des Wärmetauschers veränderlichen Betriebstemperaturen spricht man von Belastungskombinationen von Säure- und Temperaturbelastung. Dadurch steigen die Anforderungen an die heizgas- und kondenswasserberührten Werkstoffe deutlich. Bauteile wie Wärmetauscher, Abgassammler und Abgasleitung müssen in jedem Fall gegenüber den Säuren resistent sein, weshalb es üblich ist, diese Bauteile je nach Anwendungsfall und verwendetem Brennstoff aus Edelstahl, Aluminium, Kunststoff oder Keramik zu fertigen. Speziell in der Ölbrennwerttechnik kommen im Allgemeinen geschweißte Wärmetauscher aus rostfreiem Edelstahl zur Anwendung (Rohr- und Blechkonstruktionen). Sie bieten den Vorteil, die Säurebelastung weitgehend ohne Korrosion zu ertragen. Nachteilig sind die mit dem Werkstoff verbundenen hohen Kosten, ungünstigere konstruktive Randbedingungen zum Skalieren auf andere Leistungsgrößen und die größeren, in räumlich engen Verhältnissen schwer handhabbaren Baugrößen.

Die Wärmetauscher konventioneller Heizwertgeräte werden häufig aus Gusseisen und Baustahl hergestellt. Sie zeichnen sich durch hohe Robustheit und lange Lebensdauer aus. Der Aufbau gusseiserner Wärmetauscher aus zumeist identischen Kesselgliedern erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Stahlkessel wiederum können auch in kleineren Stückzahlen günstig dargestellt werden. Die Werkstoffe ertragen die kurzen Abgaskondensationsphasen bei Betriebsstart und kaltem Wärmetauscher sehr gut. Lediglich für den Brennwertbetrieb mit länger anhaltendem Kondenswasseranfall sind Gusseisen und Baustahl in ihrer heutigen Form nicht geeignet.

Neben den vorgenannten Wärmetauschern gibt es auch solche aus kostengünstigen, nicht-rostfreien Grundwerkstoffen mit hierauf oberflächlich aufgebrachten Beschichtungen.

Die DE 10 2004 024 794 B4 offenbart die für Anwendungsfälle bei niedrigen Temperaturen (ca. 80...150 °C) geeigneten Beschichtungswerkstoffe PE, PP, PVC und PVDF, wobei diese zumindest bereichsweise durch Bestrahlung vernetzt sind. Damit sind diese Beschichtungssysteme nur für nachgeschaltete, brennerferne Wärmetauscher bzw. Wärmetauscherbereiche verwendbar und kommen für eine Anwendung in Brennwertheizgeräten nicht in Frage, wo der Wärmetauscher nämlich Abgasen in einem sehr großen Temperaturbereich (Flammentemperatur bis ca. 1200 °C, Abgastemperatur ca. 35...60 °C) ausgesetzt ist.

Im ausgesprochenen Hochtemperaturbereich (Beispiel verfahrenstechnischer Anlagen- und Apparatebau) werden kostengünstige, nicht-rostfreie Grundwerkstoffe beispielsweise mit Hochtemperaturlack (Silikonharz, Plasmapolymer, Polysiloxan) oder Email beschichtet. Diese Beschichtungen können auch säurebeständig sein, wie das Beispiel emaillierter Auskleidungen in Rauchgasentschwefelungsanlagen zeigt. Diese Anwendungen unterscheiden sich aber zumindest durch ihre vergleichsweise konstanten Betriebsbedingungen von der Brennwertheiztechnik. Die genannten Hochtemperaturlacke und Emails sind unter den erläuterten Betriebsbedingungen der Ölbrennwertheiztechnik - Belastungskombinationen aus Temperatur- und Säureangriff mit schnellen und massiven Wechseln - nicht dauerbeständig und daher ungeeignet.

Unter günstigen Bedingungen (z.B. Brennstoff Erdgas oder Heizöl EL schwefelarm) können für Brennwertwärmetauscher Werkstoffe eingesetzt werden, die nicht 100%ig korrosionsbeständig sind, z.B. Aluminiumguss-Legierungen. Hier ist im Brennwertbetrieb mit einer reduzierten aber unter Umständen immer noch ausreichenden Lebensdauer zu rechnen. Durch entsprechende Beschichtungssysteme (z.B. Ormocere) kann in derartigen Fällen die Lebensdauer merklich verlängert werden. Hierfür ist es - im Gegensatz zu der vorliegenden Erfindung - nicht zwingend erforderlich, dass die Wärmetauscheroberfläche vollständig abgedeckt ist (Barriere), da der Korrosionsangriff nicht vermieden, sondern nur reduziert wird. Aufgrund der beschränkten Korrosionsschutzwirkung kommen derartige Korrosionsschutzsysteme für nicht-rostfreie Werkstoffe wie Baustahl oder Gusseisen oder für kritische Einsatzbedingungen (schwefelhaltiges Heizöl) nicht in Frage.

Hinsichtlich der heizwasserseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Auf diese Weise sind trotz geringen Wasserinhaltes recht hohe, heizgasseitig eingetragene Wärmestromdichten realisierbar. Bei nicht zwangsdurchströmten Wärmetauschern ist der Kesselwasserinhalt deutlich größer, gleichzeitig sind die realisierbaren Wärmestromdichten in der Regel niedriger. Die Wasserführung erfolgt nicht in engen geschlossenen Kanälen, sondern über oberflächenvergrößernde Wärmeleitelemente, beispielsweise in Rippenform, in vergleichsweise groß bemessenen Querschnitten und basiert auf thermischer Konvektion. Ausgehend von einem beispielsweise ruhenden Kesselwasserinhalt wird bei heizgasseitiger Beheizung des Wärmetauschers das den Wärmetauscher berührende Wasser durch Wärmeleitung erwärmt. Aufgrund des thermischen Auftriebs kommt allmählich eine Strömungswalze auf der Wasserseite in Gang, die das erwärmte Wasser nach oben abführt und weiteres zu erwärmendes Wasser von unten an die heiße Wärmetauscheroberfläche heranführt. Wegen dieser konvektiven Strömungswalze und den groß bemessenen Querschnitten weisen nicht zwangsdurchströmte Wärmetauscher eine hohe Robustheit im Betrieb zum Beispiel gegenüber einem etwaigen Pumpenausfall auf.

Der Erfindung liegt die Aufgabe zugrunde, einen Wärmetauscher für ein Brennwertheizgerät zu schaffen, der auch für die Gas- und Ölbrennwerttechnik geeignet ist, dessen Konstruktion auf einem kostengünstigen, nicht notwendigerweise rostfreien Grundwerkstoff basiert und auch die Vorteilsnutzung der Herstellung im Gießverfahren ermöglicht.

Erfindungsgemäß wird dies durch die Gegenstände mit den Merkmalen des Patentanspruches 1 gelöst. Vorteilhafte Weiterbildungen sind den Unteransprüchen zu entnehmen.

Der erfindungsgemäße Wärmetauscher ist gekennzeichnet durch eine Beschichtung mindestens in Teilbereichen der heizgasberührten Strömungskanal-Oberflächen. Diese Beschichtung besteht aus einem Kunststoff oder einem Kunststoffgemisch und dient der Bildung einer geschlossenen Barriere gegenüber den gasförmigen und/oder kondensierenden Heizgasbestandteilen. Die Beschichtung ist innerhalb weiter Grenzen langzeitbeständig gegenüber dem sauren Kondenswasser sowie gegenüber den Heizgastemperaturen, mit denen sie im Betrieb belastet ist. Durch ihre Barrierewirkung stellt sie eine zuverlässige Trennung zwischen dem Heizgas und dem Wärmetauschergrundwerkstoff dar und schützt so den Wärmetauscher vor einem Kontakt mit dem aggressiven Kondenswasser der abkühlenden Heizgase. Schutzmechanismen wie sie häufig bei Korrosionsschutzbeschichtungen an Fehlstellen zum Tragen kommen (z.B. reduzierte Unterrostung / Unterwanderung durch kathodischen Korrosionschutz) kommen im Einsatzfall für Brennwertwärmetauscher für schwefelhaltige Brennstoffe aufgrund der extremen Aggressivität der Kondensate nicht in Betracht. Die eingesetzten Kunststoffe müssen sowohl die thermischen, als auch die mechanischen und die chemischen Belastungen sowie die Kombinationsbelastungen ohne Veränderung der chemischen Struktur wie auch der mechanischen Kennwerte überstehen.

Die heizgasberührten Strömungskanal-Oberflächen können vollständig beschichtet sein vom heißen Einströmbereich der Heizgase, der eine Brennkammer des heizgaserzeugenden Gas- oder Ölbrenners umfassen kann, bis hin zum kühleren Ausströmbereich (Nachschaltheizfläche). Die Beschichtung kann aber auch auf Teilbereiche der Strömungskanal-Oberfläche beschränkt sein und beispielsweise nur die im Betrieb durch Kondenswasser feucht werdenden Bereiche abdecken. Ferner kann die Beschichtung hinsichtlich ihres Aufbaus und ihrer Auslegung auch variieren und an den heißen bzw. kühleren Bereich angepasst sein, so dass im heißeren Bereich die Temperaturbeständigkeit im Vordergrund steht, im kühleren Bereich aber die Säurebeständigkeit.

Der Kunststoff oder das Kunststoffgemisch zur Beschichtung des Wärmetauschers ist bevorzugt aus der Gruppe der teilkristallinen, teilfluorierten oder vollfluorierten Kunststoffe ausgewählt. Beispielhaft seien hier Ethylen-Trifluorochlorethylen (E-CTFE), Propylethylen-Polytetrafluorethylen (ETFE), Fluroethylen-Propylen (FEP), und Perfluroalkylvinylether (PFA) genannt. Die Stoffe können als Pulverlack oder als Nasslack (vorzugsweise auf Wasserbasis; Dispersionen, Suspensionen, Slurry) verarbeitet werden, wobei die Nasslacke mit allen für Nasslacke üblichen Applikationsverfahren verarbeitet werden können. Der entscheidende Unterschied zu bisher vorgeschlagenen Lösungen im Hochtemperaturbereich ist die optimierte Abstimmung aus Temperatur- und Chemikalienbeständigkeit. Die bisher regelmäßig vorgeschlagenen Beschichtungswerkstoffe (z.B. Email) waren zwar hochtemperaturbeständig, versagten aber stets bei schneller Temperaturwechselbelastung bzw. bei Wechselbelastung aus Temperatur und chemischem Angriff.

Bei der vorgeschlagenen Lösung kann durch eine exaktere Abstimmung der Wärmetauscherkonstruktion auf eine sehr hohe Temperaturbeständigkeit verzichtet werden ohne bedeutende Nachteile bezüglich Kompaktheit und Leistungsdichte des Wärmetauschers in Kauf nehmen zu müssen. Dafür wird aber erstmals eine Beschichtungsklasse vorgeschlagen, die den massiven Wechselbelastungen, die auf einen Wärmetauscher in Brennwertheizungen einwirken, über die gesamte Lebensdauer standhält.

In einer geeigneten Ausführung weist die Beschichtung einen mehrschichtigen Aufbau auf. Beschichtungsfehlstellen bzw. Poren in den einzelnen Schichten werden dadurch bei gleichzeitig wirtschaftlicher Gesamtschichtdicke zuverlässig vermieden.

Dabei können die Beschichtung als solche oder auch nur einzelne Schichten der Beschichtung eine wärmeleitende und/oder diffusionshemmende Pigmentierung umfassen. Dies steigert die Beständigkeit und Barrierewirkung gegenüber dem Kondenswasser, wodurch die erforderliche Lackschichtdicke reduziert wird. Zusätzlich kann durch geeignete Pigmentierung die Wärmeleitfähigkeit der Beschichtung erhöht werden.

In einem besonders geeigneten Ausführungsbeispiel umfasst die mehrschichtige Beschichtung einen Haftvermittler (Primer) und/oder einen ein- oder mehrschichtigen Grundlack und/oder einen Decklack.

Ein mögliches Verfahren zum Aufbringen der Beschichtung auf den erfindungsgemäßen Wärmetauscher ist durch mehrere kombinierbare Verfahrensschritte gekennzeichnet. Dazu gehören das Entgraten, Strahlen und Entstauben der zu beschichtenden Wärmetauscheroberfläche sowie das Aufbringen der einzelnen Schichten aus pneumatisch zerstäubten, hydraulisch zerstäubten (Airless) oder elektrostatisch applizierten Beschichtungswerkstoffen, gegebenenfalls mit jeweils schichtweisem Trocknen.

Mit der Erfindung ist ein Wärmetauscher geschaffen, der eine kostengünstige Konstruktion aus vergleichsweise einfachen, nicht-rostfreien Grundwerkstoffen ermöglicht, der auch im kondensierenden und in der Regel häufig taktenden Betrieb von Gas- und Ölbrennwertheizgeräten eine hohe Lebensdauer verspricht, indem mittels einer - hinsichtlich der Vorgabe der Einsatzbedingungen in sehr heißen Abgasen - überraschenden, weil nur bis ca. 260 °C beständigen Kunststoff-Oberflächenbeschichtung eine über die gesamte Lebensdauer des Wärmetauschers wirksame Barriere zwischen aggressivem (saurem) Kondenswasser und Grundwerkstoff gebildet wird.

Die Beschichtung des erfindungsgemäßen Wärmetauschers ist innerhalb eines bestimmten Temperaturbereichs stabil (je nach verwendeter Stoffklasse: Oberflächentemperatur bis etwa 260 °C) und kann darüber hinaus auch kurzzeitig höhere Temperaturspitzen vertragen. Neben der Verbrennungsführung beim heizgaserzeugenden Gas- oder Ölbrenner mit einer Flammentemperatur bis ca. 1200 °C und den resultierenden Heizgastemperaturen bietet die geometrische Gestaltung des Wärmetauschers den nötigen Einfluss zur Einhaltung des zulässigen Temperaturbereichs. Neben einer effektiven rückseitigen Wasserkühlung mit Kesselwasser können im brennernahen Bereich die Oberflächentemperaturen außer durch die wärmeableitende Beschaffenheit (Pigmentierung) des Beschichtungswerkstoffs zum Beispiel auch durch vergrößerte Strömungsquerschnitte und glatte Oberflächen gesenkt werden, während oberflächenvergrößernde Elemente wie Rippen oder Noppen erst in den nachgeschalteten Wärmetauscherbereichen zum Einsatz kommen. Darüberhinaus bietet die geometrische Gestaltung des Wärmetauschers auch die Möglichkeit, beschichtungsgünstige Oberflächen zu erzeugen, wie zum Beispiel Oberflächen ohne Hinterschneidungen, was für eine Beschichtung ohne Sprühschatten von Bedeutung ist. Oberflächen mit geringer Rauhigkeit begünstigen darüber hinaus eine fehlstellen- und porenfreie Beschichtung. Es hat sich überraschenderweise gezeigt, dass es trotz der maximal zulässigen Oberflächentemperatur des Beschichtungswerkstoffs bei optimierter Wärmetauscherauslegung ohne weiteres möglich ist, Wärmetauscher mit einer sehr hohen Flächenleistung (z.B. > 30 kW/m²) darzustellen und damit sehr kompakte und kostengünstige Wärmetauscher zu realisieren. Es ist daher weder technisch notwendig noch wirtschaftlich vertretbar, brennwertnutzende Wärmetauscher für Öl- oder Gasheizungen auf eine noch höhere Oberflächentemperatur auszulegen. Der erzielbare Nutzen (Kompaktheit, leichte Bauweise, Materialeinsparung) wäre minimal, während auf der anderen Seite alle bekannten Korrosionsschutzsysteme für derartige Temperaturen (> 300 °C) die erforderliche Dauerhaltbarkeit - speziell bezüglich der schnell wechselnden Belastung - nicht erfüllen würden.

## Patentansprüche

1. Wärmetauscher für ein Brennwertheizgerät aus nicht-rostfreiem Grundwerkstoff, insbesondere aus Aluminiumguss, Gusseisen oder Baustahl, mit Strömungskanälen für die Heizgasführung und die Wärmeträgerfluidführung,
**gekennzeichnet durch** eine Beschichtung mindestens in Teilbereichen der heizgasberührten Strömungskanal-Oberflächen, bestehend aus einem Kunststoff oder einem Kunststoffgemisch, zur Bildung einer geschlossenen Barriere gegenüber gasförmigen und/oder kondensierenden Heizgasbestandteilen, wobei der Kunststoff oder das Kunststoffgemisch zur Beschichtung aus der Gruppe der teilkristallinen, teilfluorierten oder vollfluorierten Kunststoffe besteht, insbesondere aus Propylethylen-Polytetrafluorethylen (ETFE), Ethylen-Trifluorochlorethylen (E-CTFE), Fluroethylen-Propylen (FEP) und/oder Perfluroalkylvinylether (PFA), und wobei die Kunststoffe in Form von Pulverlacken oder in flüssige Phasen eingearbeitet verarbeitet werden.

2. Wärmetauscher nach Anspruch 1,
**dadurch gekennzeichnet, dass** die Beschichtung einen ein- oder mehrschichtigen Aufbau aufweist.

3. Wärmetauscher nach Anspruch 1 oder 2,
**dadurch gekennzeichnet, dass** die Beschichtung oder einzelne Schichten der Beschichtung eine wärmeleitende und/oder diffusionshemmende Pigmentierung umfassen.

4. Wärmetauscher nach einem der Ansprüche 1 bis 3,
**dadurch gekennzeichnet, dass** die mehrschichtige Beschichtung einen Haftvermittler und/oder einen ein- oder mehrschichtigen Grundlack und/oder einen ein- oder mehrschichtigen Decklack umfasst.
